# EUROPÄISCHE PATENTSCHRIFT

(11) **EP 0 469 351 B1**
(45) Veröffentlichungstag und Bekanntmachung des Hinweises auf die Patenterteilung: **22.12.1993**
(21) Anmeldenummer: 91111464.3
(22) Anmeldetag: 10.07.1991
(51) Int. Cl.: A01D 34/64, A01B 59/048

(54) **Vorrichtung zum Anschliessen eines Frontmähers an ein Motorfahrzeug**
Device for attaching a front mounted mower to a motor vehicle
Dispositif d'attelage d'une tondeuse frontale à un véhicule motorisé

(30) Priorität: 19.07.1990 US 555971
(43) Veröffentlichungstag der Anmeldung: 05.02.1992
(73) Patentinhaber: DEERE & COMPANY, Moline, Illinois 61265 (US)
(72) Erfinder: Dobberpuhl, Dale Rudolph, Horicon, Wisconsin 53032 (US)
(74) Vertreter: Feldmann, Bernhard

(56) Entgegenhaltungen:
- EP-A- 0 245 824
- FR-A- 2 608 006
- US-A- 3 702 051
- US-A- 4 313 295
- US-A- 4 320 616
- US-A- 4 325 211
- US-A- 4 760 686
- US-A- 4 869 057
- US-A- 4 919 215

## Beschreibung

Die Erfindung bezieht sich auf eine Kombination aus einem Motorfahrzeug, insbesondere Kleinschlepper für die Rasen- und Grundstückspflege, mit zwei vorderen Laufrädern, einem beiderseits über die Breite des Motorfahrzeuges mit seinen seitlichen Enden überstehenden Mähergehäuse eines Frontmähers, das mit Bezug auf die Fahrtrichtung mit einem rückwärtigen sich unmittelbar vor den Laufrädern des Motorfahrzeuges befindlichen und einem frontseitigen sich auf Laufrädern abstützenden Abschnitt versehen ist, und einer Vorrichtung zum Anschließen des Frontmähers an das Motorfahrzeug, die zwei mit gegenseitigem Querabstand angeordnete Schubarme aufweist, deren frontseitigen Enden an dem frontseitigen Abschnitt des Mähergehäuses und deren rückwärtigen Enden an das Motorfahrzeug zwischen dessen vorderen Laufräder vertikal schwenkbar angeschlossen sind, wobei der rückwärtige Abschnitt des Mähergehäuses an Anschlußstellen an den Schubarmen aufgehängt ist.

Kleinschlepper für die Garten- und Rasenpflege sind in der Regel so gebaut, daß zwischen ihren Achsen ein Mähwerk angeschlossen werden kann. Mit solchen Mähwerken läßt sich ein sauberer Rasenschnitt erzielen. Aber auch bei relativ großen Schnittbreiten, bei denen die Mähwerke seitlich über die Fahrzeugbreite hinausragen, entstehen Probleme mit schwer zugänglichen Stellen, an die das zwischen den Achsen angebaute Mähwerk nicht herankommt. Solche Stellen mußten dann von Hand nachgeschnitten werden. Ein Nachschneiden von Hand ist aber dann nicht mehr erforderlich, wenn der Mäher frontseitig an den Kleinschlepper angebaut ist. Ein solcher Anbau ermöglicht es, die sonst so schwer zugänglichen Stellen leichter zu erreichen. Große Flächenleistungen lassen sich insbesondere mit frontseitig angebauten Großflächenmähern erzielen, die drei nebeneinander angeordnete Sichelmesser aufweisen, sich durch eine flache Bauweise auszeichnen, um beispielsweise besser unter Sträuchern arbeiten zu können, und an dem Kleinschlepper seitlich versetzt angeschlossen sein können, damit in unterschiedlichen Spuren gefahren werden kann, um Bodenverdichtungen zu verhindern. Derartige Großflächenmäher sind an den Kleinschlepper pendelnd angebaut, damit der Mäher etwaigen Bodenunebenheiten folgen kann.

Bei der eingangs genannten Kombination (FR-A-2 608 006) sind beide Schubarme zweiteilig ausgebildet, an ihren frontseitigen Enden mit Kugelgelenken versehen und verlaufen vom Motorfahrzeug aus gesehen zunächst geradlinig, wobei einer der Schubarme dann hinter seiner Anschlußstelle für den entsprechenden rückwärtigen Abschnitt des Mähergehäuses nach außen abgewinkelt ist. Die Anschlußstellen sind als aufgebohrte umgekehrt U-förmige Platten mit einer aufgesetzten Buchse zur Aufnahme der Tragglieder für den rückwärtigen Abschnitt des Mähergehäuses ausgebildet, an den Außenseiten der Schubarme angeschweißt und weisen eine dem Außendurchmesser der Buchsen entsprechende Breite auf, damit die Tragglieder für den rückwärtigen Abschnitt des Mähergehäuses unmittelbar neben den Schubstangen verlaufen. Bei einem Kippen des Mähergehäuses um eine in Fahrtrichtung verlaufende Achse beim Überfahren einer einseitigen Bodenerhebung liegt damit der Kippunkt innerhalb der Spurweite des Motorfahrzeuges und die zugehörige Seite des Mähergehäuses senkt sich relativ weit nach unten.

Bei einer bekannten Vorrichtung zum Anschließen eines Frontmähers an ein Motorfahrzeug (US-A-4 919 215) sind zwei Schubarme vorgesehen und die Aufhängung erfolgt über Kugelgelenke, damit der Frontmäher allseits beweglich ist und sich Bodenunebenheiten anpassen kann. Um ein seitliches Verkippen der Schubarme zu verhindern ist noch eine am Motorfahrzeug gelenkig gelagerte Schwingstange vorgesehen. Das rückwärtige Ende dieses Mähergehäuses ist nicht mit den Schubarmen verbunden. Eine solche Verbindung ist aber ebenfalls nicht mehr neu.

Es ist außerdem bekannt (US-A-4 760 686), einen Frontmäher derart auszubilden, daß er sich im Einsatz auf vorderen Laufrädern abstützt, wobei am rückwärtigen Ende des Mähergehäuses noch kleine Spurräder vorgesehen sind, die verhindern sollen, daß die Sichelmesser solcher Mähwerke in den Boden schneiden. Bei Arbeiten auf ebenem Grund haben diese Spurräder keinen Bodenkontakt, jedoch dann, wenn der Frontmäher bei Bodenunebenheiten ausreichend verkippt. Diese Spurräder erlauben dem Mähwerk eine Kippbewegung solange auszuführen, bis eins der Spurräder auf den Boden auftrifft, so daß dann das Gras in unterschiedlichen Höhen geschnitten wird, was unerwünscht ist, aber bei Kippbewegungen bei allen bisher bekannt gewordenen Frontmähern stets auftritt.

Die Erfindung will hier mit einer Kombination Abhilfe schaffen, über die ein Mähergehäuse durch ein Motorfahrzeug derart geschoben werden kann, daß beim Auftreffen einer Seite des Mähergehäuses auf eine Bodenerhebung oder dergleichen, das korrespondierende Kippen der anderen Seite zumindest reduziert wird. Diese Aufgabe ist nach der Erfindung dadurch gelöst worden, daß die eine Anschlußstelle an einem Schubarm an dem Ende eines sich mit Bezug auf die Fahrtrichtung sich seitlich nach außen erstreckenden Auslegers vorgesehen ist, der anderenends mit einem der Schubarme verbunden ist. Auf diese Weise ist die Kippachse seitlich verlegt worden, so daß, wenn beispielsweise das dem Ausleger abgelegene vordere Laufrad auf eine Bodenerhöhung trifft, die dem Ausleger zugelegene kurze Seite des Mähergehäuses nach unten kippt. Da aber das Mähergehäuse um die nunmehr seitlich verlegte und rückwärtige Verbindung des Frontmähers mit dem Ausleger kippt, ist der Kippbereich geringer als bei den bisher bekannt gewordenen frontseitig angebauten Mähern, wodurch letztlich ein gleichmäßiger Schnitt erreicht wird.

Nach der Erfindung wird ferner vorgeschlagen, daß die Schubarme mit dem Mähergehäuse und dem Motorfahrzeug allseits beweglich verbunden sind, eine Schwingstange einenends schwenkbar an einen Schubarm und anderenends fest an den den Ausleger aufnehmenden Schubarm angeschlossen ist und daß an den Ausleger ein Winkelhebel angeschlossen ist, der an dem seitlichen rückwärtigen Bereich des Mähergehäuses über eine Totgangverbindung angreift.

Zweckmäßig kann außerdem der Winkelhebel schwenkbar an dem Ausleger angeschlossen und über eine Stange mit einem Frontteil des Mähergehäuses verbunden sein. Hierdurch wird das rückwärtige Ende des Mähers automatisch mitverstellt, wenn über gesonderte und an sich bekannte Mittel das vordere Ende des Frontmähers höhenverstellt wird.

Damit insbesondere keine Bodenverdichtungen durch ständiges Fahren in der gleichen Spur auftreten, wird nach der Erfindung ferner noch vorgeschlagen, daß der Frontmäher seitlich versetzt an das Motorfahrzeug angeschlossen ist und sich der Ausleger von dem Schubarm aus gesehen in die Richtung erstreckt, in die der Frontmäher weiter nach außen versetzt ist.

In den Fig. 1, 2 und 4 der Zeichnung ist ein nachfolgend näher erläutertes Ausführungsbeispiel der Erfindung dargestellt. Es zeigt:
- Fig. 1: einen Kleinschlepper mit angeschlossenem großflächigen Frontmäher,
- Fig. 2: eine Anschlußvorrichtung des Frontmähers an den Kleinschlepper in Draufsicht,
- Fig. 3: den möglichen Kippbereich eines herkömmlichen Frontmähers,
- Fig. 4: den reduzierten Kippbereich des Frontmähers nach der Erfindung und
- Fig. 5: die Verbindung des seitlichen rückwärtigen Endes des Mähergehäuses mit einem Schubarm.

Die in der nachfolgenden Beschreibung verwendeten Begriffe rechts und links beziehen sich auf die Blickrichtung einer hinter dem Kleinschlepper sich befindlichen Person.

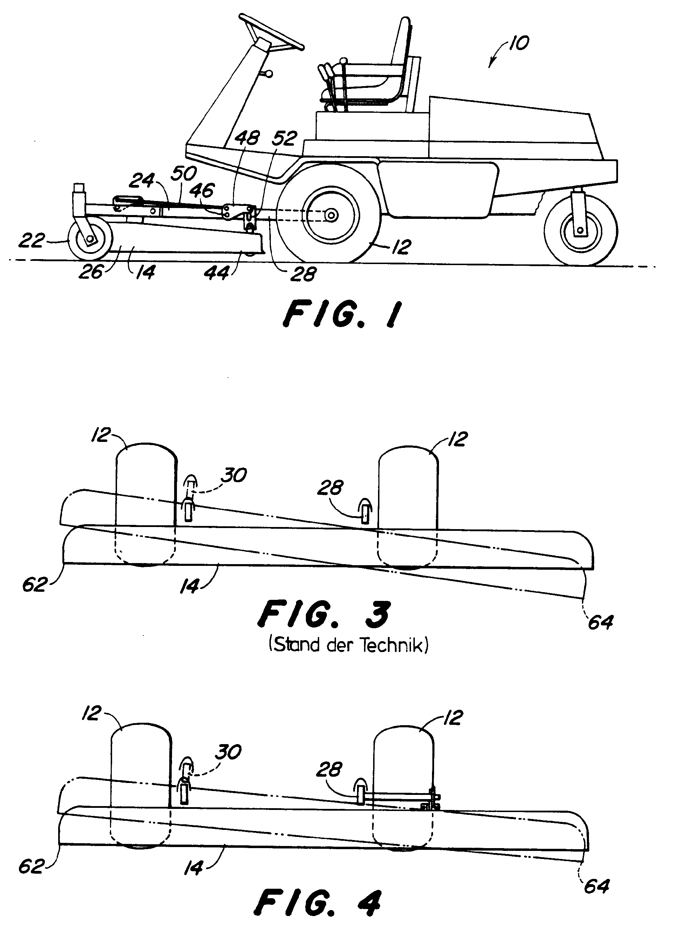

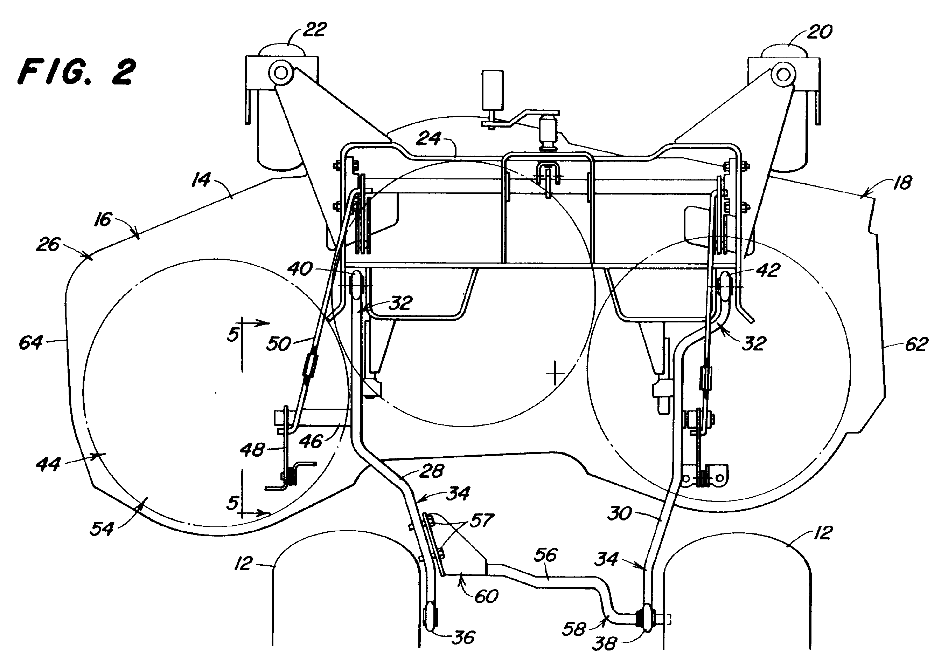

In Fig. 1 der Zeichnung ist ein Motorfahrzeug 10 in Form eines Kleinschleppers für die Rasen- und Gartenpflege dargestellt. Es stützt sich auf einem lenkbaren rückwärtigen Laufrad und zwei vorderen angetriebenen Treibrädern 12 ab, wodurch der Kleinschlepper sehr wendig ist und besonders gut mit einem frontseitig angebauten Mäher eingesetzt werden kann. Das Mähergehäuse oder Mäherdeck des geschobenen Frontmähers ist mit 14, seine linke Seite mit 16 und seine rechte Seite mit 18 bezeichnet. Rechte und linke vordere Laufräder 20 und 22 bzw. Pendelräder tragen den frontseitigen Bereich 26 des Mähergehäuses 14 höheneinstellbar. Der Frontmäher ist über einen ersten und zweiten oder linken und rechten Schubarm 28 und 30 an den Kleinschlepper anschließbar. Sie sind hierzu an einen Frontrahmen 24 angeschlossen. Beide Schubarme 28 und 30 weisen einen vorderen Teil 32, der an dem Mähergehäuse 14 angelenkt ist, und einen rückwärtigen Teil 34 auf, der mit dem Motorfahrzeug 10 gekuppelt ist. Hierbei erfolgt die Verbindung der rückwärtigen Teile 34 der Schubarme 28 und 30 mit dem Motorfahrzeug 10 zwischen dessen Treibrädern 12 über Kugelgelenke 36 und 38, die eine allseits bewegliche Aufhängung ermöglichen. Desgleichen erfolgt die Verbindung der vorderen Teile 32 der Schubarme 28 und 30 mit dem Mähergehäuse 14 über Kugelgelenke 40 und 42. Diese ermöglichen dem Mähergehäuse 14 eine Schwenkbewegung um eine durch beide vorderen Kugelgelenke 40 und 42 verlaufende Achse. Gleichfalls erlauben die beiden vorderen Kugelgelenke 40 und 42 dem Mäher eine Schwenkbewegung um eine in Fahrtrichtung verlaufende horizontale oder etwa horizontale Achse, wenn eine Seite des Mähergehäuses 14 bzw. eins der Pendelräder über eine Bodenerhebung geführt wird. Beim bevorzugten Ausführungsbeispiel sind Kugelgelenke eingesetzt, doch können auch andere Gelenke, die eine Bewegung in allen Richtungen zulassen, Verwendung finden.

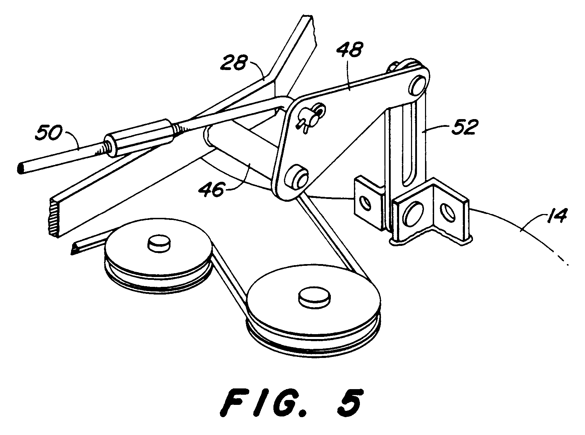

Das rückwärtige Ende des Mähergehäuses 14 ist an den Schubarmen 28 und 30 aufgehängt und nur die linke Aufhängung wird im einzelnen nachfolgend beschrieben. An dem linken Schubarm 28 ist, wie aus den Fig. 2 und 5 ersichtlich ist, ein Ausleger 46 fest angeordnet, der sich von dem Schubarm 28 seitlich nach außen erstreckt. An seinem freien Ende ist ein Winkelhebel 48 verschwenkbar angebracht, in dessen Scheitelpunkt etwa eine Stange 50 angreift, die anderenends mit dem Frontrahmen 24 verbunden ist. Der andere Schenkel des Winkelhebels 48 ist über eine Totgangverbindung in Form eines einen Längsschlitz aufweisenden Lenkers 52 an einen seitlichen und rückwärtigen Bereich 54 des Mähergehäuses 14 angeschlossen. Bei derartigen Mähern kann deren frontseitiges Ende von einer Bedienungsperson höheneingestellt werden und diese Einstellung wird dann automatisch über die Stange 50 und den Winkelhebel 48 auf den rückwärtigen Bereich des Mähergehäuses übertragen. Eine gesonderte Einstellung im Bereich des Auslegers 46 ist damit überflüssig. Beim Überfahren von Bodenunebenheiten dient die Totgangverbindung als Kippunkt, wie dies in der Fig. 4 angedeutet ist.

Die rechte rückwärtige Aufhängung des Mähergehäuses 14 an den rechten Schubarm 30 kann über einen Lenker erfolgen, der ähnlich dem Lenker 52 ausgebildet ist.

Das bevorzugte Ausführungsbeispiel ist, wie ebenfalls aus Fig. 2 erkennbar ist, noch mit einer Schwingstange 56 ausgerüstet, die über Schrauben 57 an die linke Schubstange 28 fest angeschlossen ist. Sie weist eine Versteifung 60 und eine Kröpfung 58 auf und ist mit ihrem anderen Ende mit der rechten Seite des Motorfahrzeugs 10 verbunden. Beim Ausführungsbeispiel ist das rechte Ende der Schwingstange 56 in die Bohrung des rechten rückwärtigen Kugelgelenkes 38 eingesetzt und kann damit unabhängig von der rechten Schubstange 30 verschwenken. Infolge der festen Verbindung bewegt sich die Schwingstange mit der linken Schubstange 28 auf und ab und um die Verbindung mit dem rechten Kugelgelenk 38. Die Schwingstange 56 verhindert, daß die linke Schubstange 28 um ihre Längsachse verkippt infolge des auf sie einwirkenden Gewichtes des rückwärtigen Endes des Mähers. Durch den Ausleger 46 entsteht in diesem Bereich noch ein zusätzliches Moment. Ohne eine solche Schwingstange 56 würde der linke Schubarm 28 in seiner Anschlußstelle mit dem linken Kugelgelenk 36 verkippen, da dieses eine Bewegung in alle Richtungen zuläßt. Außerdem würde dann das Gewicht des rückwärtigen Bereiches des Mähers den Ausleger 46 nach unten schwenken. Alles dies wird durch die Schwingstange verhindert, und zwar bei sämtlichen anderen möglichen Bewegungen der linken Schubstange 28.

Im nachfolgenden wird auf die Wirkungsweise der vorstehend beschriebenen Vorrichtung eingegangen. Durch den Anschluß der Schubstangen 28 und 30 an das Motorfahrzeug über rechte und linke rückwärtige Kugelgelenke 36 und 38 kann der Frontmäher um eine durch die Kugelgelenke 36 und 38 verlaufende horizontale Achse vertikal verschwenken. Damit können breite Bodenwellen leicht überwunden werden, und zwar bevor das Motorfahrzeug auf diese trifft. Der daraus resultierende Schnitt ist damit wesentlich gleichmäßiger als in solchen Fällen, in denen der Frontmäher starr mit dem Motorfahrzeug verbunden wäre.

Das Mähergehäuse 14 kann außerdem um in Fahrtrichtung verlaufende Achsen von einer Seite auf die andere kippen und so einseitige Bodenerhebungen überwinden, ohne daß sich eine Seite von dem Boden abheben würde. Trifft beispielsweise die rechte Seite des Frontmähers mit dem rechten Pendelrad 20 auf eine Bodenerhebung und das linke Pendelrad 22 jedoch nicht, dann wird die rechte Seite des Mähers nach oben kippen, wobei die Verschwenkung um das linke vordere Kugelgelenk 40 erfolgt. Bei herkömmlichen Mähergehäusen, wie sie in der Fig. 3 dargestellt sind, würde dabei deren rechte Außenkante 62 nach oben angehoben, während deren linke Seite 62 weiter nach unten verschwenkt würde. Aus Stabilitätsgründen sind die Schubarme bei herkömmlichen Frontmähern relativ weit hinten am Motorfahrzeug angeschlossen und die rückwärtigen Enden der Mähergehäuse, ebenso weit hinten wie möglich, an den rückwärtigen Enden der Schubarme. Das Kippen erfolgt um einen dieser Anschlüsse und insbesondere bei Großflächenmähern ist dann der von diesem Anschluß noch seitlich weisende Teil recht lang, so daß sich dieser Teil recht tief absenken kann und gegebenenfalls mit dem Boden Kontakt bekommt. Verstärkt wird dies noch dann auftreten, wenn das Großflächenmähwerk versetzt angeordnet ist, wenn sich also ein äußeres Sichelmesser vor einem Treibrad befindet und das andere äußere Sichelmesser seitlich außen neben dem anderen Treibrad. Bei all diesen herkömmlichen Kippbewegungen tritt zumindest ein ungleichmäßiger Schnitt auf, und ein Aufschlagen des außen und unten liegenden Sichelmessers auf die Grasnabe ist häufig die Folge.

Bei der Vorrichtung nach der vorliegenden Erfindung treten diese Nachteile nicht auf oder werden zumindest reduziert. Trifft zum Beispiel bei einem mit der erfindungsgemäßen Vorrichtung ausgerüsteten Mäher die rechte Seite 18 auf eine Bodenerhebung, wie es schematisch in Fig.4 dargestellt ist, dann schwenkt zunächst der rechte Schubarm 30 nach oben um seine Anschlußstelle im rechten rückwärtigen Kugelgelenk 38. Da der linke Teil des Mähers nicht über eine Bodenerhebung fährt, wird auch der linke Schubarm 28 nicht bei diesem Vorgang höhenverschwenkt. Das Mähergehäuse 14 wird daher um seine Anschlußstelle an den Ausleger 46 nach einer Seite kippen, wobei die rechte Seite angehoben wird und die Bodenerhebung überwindet. Gleichzeitig kippt die linke Seite 64 des Mähergehäuses ein wenig nach unten. Die nach unten gerichtete Kippbewegung ist reduziert, da der Schwenkpunkt infolge des nach seitlich außen weisenden Auslegers 46 seitlich nach außen verlegt worden ist.

Während des Einsatzes wird der linke rückwärtige Bereich 54 des Mähergehäuses 14 von dem Ausleger 46 und dem linken Schubarm 28 getragen. Das Gewicht des Mähers tendiert dazu, das linke Ende des Auslegers 46 nach unten zu ziehen und den Schubarm 28 um seine Längsachse zu verkippen. Dieser Tendenz wirkt das linke rückwärtige Kugelgelenk 36 nicht entgegen. Wäre die Schwingstange 56 nicht vorgesehen, so würde dann der linke Schubarm ohne weiteres in seiner Anschlußstelle an das Motorfahrzeug 10 verkippen. Die Schwingstange 56 aber verhindert dies, da sie mit ihrem einem Ende mit dem linken Schubarm 28 fest verbunden ist und mit ihrem anderen Ende mit Abstand zu dem linken Schubarm 28 am Motorfahrzeug 10 schwenkbar angeschlossen ist. Der schwenkbare Anschluß der Schwingstange 56 in dem rechten rückwärtigen Kugelgelenk 38 erlaubt es, daß die Schwingstange 56 mit dem linken Schubarm 28 verschwenkt bzw. dessen Bewegungen folgt.

## Patentansprüche

1. Kombination aus einem Motorfahrzeug (10), insbesondere Kleinschlepper für die Rasen- und Grundstückspflege, mit zwei vorderen Laufrädern (12), einem beiderseits über die Breite des Motorfahrzeuges (10) mit seinen seitlichen Enden überstehenden Mähergehäuse (14) eines Frontmähers, das mit Bezug auf die Fahrtrichtung mit einem rückwärtigen sich unmittelbar vor den Laufrädern (12) des Motorfahrzeuges (10) befindlichen und einem frontseitigen sich auf Laufrädern (20, 22) abstützenden Abschnitt versehen ist, und einer Vorrichtung zum Anschließen des Frontmähers an das Motorfahrzeug (10), die zwei mit gegenseitigem Querabstand angeordnete Schubarme (28, 30) aufweist, deren frontseitigen Enden an den frontseitigen Abschnitt des Mähergehäuses (14) und deren rückwärtigen Enden an das Motorfahrzeug (10) zwischen dessen vorderen Laufräder (12) vertikal schwenkbar angeschlossen sind, wobei der rückwärtige Abschnitt des Mähergehäuses (14) an Anschlußstellen an den Schubarmen (28, 30) aufgehängt ist, dadurch gekennzeichnet, daß die eine Anschlußstelle an einem Schubarm (28) an dem Ende eines sich mit Bezug auf die Fahrtrichtung sich seitlich nach außen erstreckenden Auslegers (46) vorgesehen ist, der anderenends mit einem der Schubarme (28, 30) verbunden ist.

2. Kombination nach Anspruch 1, dadurch gekennzeichnet, daß die Schubarme (28, 30) mit dem Mähergehäuse (14) und dem Motorfahrzeug (10) allseits beweglich verbunden sind, eine Schwingstange (56) einenends schwenkbar an einen Schubarm (30) und anderenends fest an den den Ausleger (46) aufnehmenden Schubarm (28) angeschlossen ist und daß an den Ausleger (46) ein Winkelhebel (48) angeschlossen ist, der an dem seitlichen rückwärtigen Bereich (54) des Mähergehäuses (14) über eine Totgangverbindung angreift.

3. Kombination nach Anspruch 2, dadurch gekennzeichnet, daß der Winkelhebel (48) schwenkbar an dem Ausleger (46) angeschlossen und über eine Stange (50) mit einem Frontteil (26) des Mähergehäuses (14) verbunden ist.

4. Kombination nach einem oder mehreren der Ansprüche 1 bis 3, dadurch gekennzeichnet, daß der Frontmäher seitlich versetzt an das Motorfahrzeug (10) angeschlossen ist und sich der Ausleger (46) von dem Schubarm (28) aus gesehen in die Richtung erstreckt, in die der Frontmäher weiter nach außen versetzt ist.

## Claims

1. A combination of a motor vehicle (10), especially a small tractor for the care of lawns and gardens, with two front running wheels (12), a mower housing (14) of a front mounted mower projecting on both sides with its lateral ends beyond the width of the motor vehicle (10), the mower housing being provided with, relative to the direction of travel, a rear section located directly in front of the running wheels (12) of the motor vehicle (10) and a front section supported on running wheels (20, 22), and a device for coupling the front mounted mower to the motor vehicle (10), which comprises two transversely spaced struts (28, 30), whose front ends are connected to the front section of the mower housing (14) so as to pivot vertically and whose rear ends are connected to the motor vehicle (10) between its front running wheels (12) so as to pivot vertically, wherein the rear section of the mower housing (14) is suspended on the struts (28, 30) at attachment points, characterized in that one attachment point on a strut (28) is provided at the end of a support (46) extending laterally outwards with reference to the direction of travel, the support being connected at the other end to one of the struts (28, 30).

2. A combination according to claim 1, characterized in that the struts (28, 30) are coupled to the mower housing (14) and to the vehicle (10) movably in all directions, a swing bar (56) is pivotally connected at one end to one strut (30) and is fixedly connected at the other end to the strut (28) receiving the support (46), and in that a bent lever (46) is connected to the support (46) and engages the lateral, rear region (54) of the mower housing (14) through a lost motion linkage.

3. A combination according to claim 2, characterized in that the bent lever (48) is pivotally connected to the support (46) and is coupled to a front part (26) of the mower housing (14) by a rod (50).

4. A combination according to one or more of claims 1 to 3, characterized in that the front mounted mower is connected to the motor vehicle (10) laterally offset and the support (46) extends out from the strut (28) in the direction in which the front mounted mower is offset further to the outside.

## Revendications

1. Combinaison d'un véhicule à moteur (10), notamment un mini-tracteur pour l'entretien de pelouses et lopins de terre, présentant deux roues avant (12), d'un carter de tondeuse (14) d'une tondeuse frontale, carter dont les extrémités latérales dépassent de part et d'autre de la largeur du véhicule à moteur (10) et qui présente, par rapport à la direction de marche, une partie arrière se trouvant juste devant les roues (12) du véhicule à moteur (10) et une partie avant s'appuyant sur des roues (20, 22), et d'un dispositif d'attelage de la tondeuse frontale au véhicule à moteur (10), dispositif qui présente deux bras de poussée (28, 30), disposés à distance transversale mutuelle, dont les extrémités avant sont raccordées à pivotement vertical à la partie avant du carter de tondeuse (14) et dont les extrémités arrière sont raccordées à pivotement vertical au véhicule à moteur (10) entre ses roues avant (12), la partie arrière du carter de tondeuse (14) étant suspendue aux bras de poussée (28, 30) en des points d'attelage, **caractérisée** en ce que l'un des points d'attelage est prévu sur un bras de poussée (28) à une extrémité d'un bras en porte à faux (46), qui s'étend latéralement vers l'extérieur par rapport à la direction de marche et dont l'autre extrémité est assemblée à un des bras de poussée (28, 30).

2. Combinaison selon la revendication 1, **caractérisée** en ce que les bras de poussée (28, 30) sont reliés au carter de tondeuse (14) et au véhicule à moteur (10) en étant mobiles de tous côtés, une bielle oscillante (56) étant raccordée à une extrémité à pivotement à un bras de poussée (30) et à l'autre extrémité fixement au bras de poussée (28) recevant le bras en porte à faux (46), et en ce qu'un levier coudé (48) est raccordé au bras en porte à faux (46), levier qui agit par l'intermédiaire d'une liaison à course morte sur la région latérale arrière (54) du carter de tondeuse (14).

3. Combinaison selon la revendication 2, **caractérisée** en ce que le levier coudé (48) est raccordé à pivotement au bras en porte à faux (46) et est relié par l'intermédiaire d'une tringle (50) à une partie avant (26) du carter de tondeuse (14).

4. Combinaison selon l'une quelconque des revendications 1 à 3, **caractérisée** en ce que la tondeuse frontale est raccordée au véhicule à moteur (10) en étant latéralement décalée, et le bras en porte à faux (46) s'étend, vu depuis le bras de poussée (28), dans la direction dans laquelle la tondeuse frontale est plus décalée vers l'extérieur.
